Europäisches Patentamt

European Patent Office

Office européen des brevets

(19)

(11) Publication number: **0 064 105**
**B1**

(12) # EUROPEAN PATENT SPECIFICATION

(45) Date of publication of patent specification: **23.10.85**

(21) Application number: **81301986.6**

(22) Date of filing: **06.05.81**

(51) Int. Cl.⁴: **H 02 K 5/22,** H 02 K 3/52,
H 02 K 15/095

(54) **Electric motor stator and a method of manufacturing the stator.**

(43) Date of publication of application:
**10.11.82 Bulletin 82/45**

(45) Publication of the grant of the patent:
**23.10.85 Bulletin 85/43**

(84) Designated Contracting States:
**DE FR GB IT NL**

(56) References cited:
**EP-A-0 001 908**
**EP-A-0 004 423**
**US-A-2 177 563**
**US-A-3 979 615**
**US-A-3 984 908**
**US-A-4 074 418**
**US-A-4 118 103**

(73) Proprietor: **AMP INCORPORATED**
**P.O. Box 3608 449 Eisenhower Boulevard**
**Harrisburg Pennsylvania 17105 (US)**

(72) Inventor: **Lill, John Francis**
**4102 Lisa Drive**
**Harrisburg Pennsylvania 17112 (US)**
Inventor: **Neff, Nelson Edward**
**407 East Derry Road**
**Hershey Pennsylvania 17033 (US)**

(74) Representative: **Gray, Robin Oliver et al**
**BARON & WARREN 18 South End Kensington**
**London W8 5BU (GB)**

Courier Press, Leamington Spa, England.

## Description

This patent relates to an electric motor stator and a method of manufacturing the stator.

We have described in EP—A1—0004421, an electric motor stator comprising a stator core, a plurality of coil supports formed integrally with the core extending inwardly towards the centre of the core at equally spaced angular intervals, a winding of coil wire on each of the coil supports, the windings on selected coil supports being connected in series by intermediate portions of the coil wire, and lead wires connected to the coils, the stator having mounted thereon a plurality of terminal receiving housings, each housing having a terminal receiving cavity therein, and a radially inwardly directed side wall and a radially outwardly directed side wall, coil wire admitting slots in the respective side walls communicating with the cavity, end portions of the coil wire extending from each winding to a terminal receiving housing through the coil wire admitting slot in the radially inwardly directed side wall thereof, through the cavity thereof and terminating at the coil wire admitting slot in the radially outwardly directed side wall thereof, the cavities receiving terminals to which the wire end portions and lead wires are electrically connected.

In this known stator, which is for a split phase, two pole electric induction motor, the housings are mounted in juxtaposed relationship at a single position on the stator core.

The invention is intended to provide a stepper motor stator which can be manufactured by means of a coil winding machine substantially without the use of manual steps in the manufacturing process, and a readily automatable method of manufacturing the stator.

Stepper motors are commonly classified with reference to the number of phases and the number of coils on the stator of the motor. The number of phases of a stepper motor is equal to the number of continuous coil wires of the stator, each coil wire being wound on one set of coil supports to produce a set of coils. For example, the windings of the stator of a four phase stepper motor, having eight coils comprises four continuous wires each wound on two coil supports to provide two coils per phase. The stator of a four phase stepper motor, having sixteen coils comprises four continuous wires each wound on four of the coil supports to provide four coils per phase. The stator of a three phase stepper motor, having twelve coils comprises three continuous wires, each of which is wound on four of the coil supports and the stator of a two phase motor, having eight coils, comprises two continuous wires each wound on four of the coil supports.

The coils of a stepper motor stator are wound on the coil supports by a winding machine which draws wire from a wire source and winds the coils on the coil supports in such a way that the sets of coils are connected to each other by intermediate portions of the coil wire. When a stator is taken from the winding machine, portions of the coil wire extending around the periphery of the core must be cut away and discarded as scrap, leaving the ends of the wires extending from the windings. These coil wire ends are then connected to lead wires.

The steps of cutting away and discarding as scrap, selected portions of the coil wire, are usually carried out manually and are thus subject to error. Careful testing of the stator is therefore required after the lead wires have been connected to the coil windings and occasional reworking must be carried out to correct errors.

According to one aspect of the invention, an electrical motor stator as defined in the first paragraph of this specification is characterised in that the housings of the stator, which is for a stepper electric motor, are spaced from one another about the periphery of the stator core with one housing positioned between the coil supports of each adjacent pair of coil supports excepting one adjacent pair thereof or group of adjacent coil supports.

The steps of inserting the terminals into the cavities and of terminating, by severing, the coil wire at the radially outwardly directed side walls of the housings, can be carried out substantially simultaneously and without the need for identifying the correct coil wire ends to be severed.

According to another aspect of the invention, a method of manufacturing a stator according to the invention is characterised by the steps of mounting the housings on one face of the stator core with one housing between the coil supports of each pair of adjacent coil supports excepting the one adjacent pair or group of adjacent coil supports, and locating the lead wires in one lead wire strain relief means positioned between the coil supports of the one adjacent pair or group of adjacent coil supports; drawing the coil wire from a coil wire source, lacing the coil wire through the coil wire admitting slots of a first of the housings to a first of the coil supports and winding a coil on the first coil support, lacing the wire from the first coil support about the periphery of the stator to a second of the coil supports which is spaced from the first coil support, winding a coil on the second coil support and lacing the wire from the second coil support through the coil wire admitting slots of a second of the housings which is proximate to the second coil support; lacing the wire from the second housing about the periphery of the stator to a third of the housings which is proximate to a third of the coil supports, lacing the wire through the coil wire admitting slots of the third housing and winding a coil on the third coil support, lacing the wire from the third coil support about the periphery of the stator to a fourth of the coil supports, winding a coil on the fourth coil support and then lacing the wire through the coil wire admitting slots of a fourth of the housings which is proximate to the fourth coil support, and continuing to lace the wire through the coil wire admitting slots of further ones of the housings, and to wind coils on associated pairs of coil supports until coils have been wound on all of the remaining pairs of coil supports so that the wire extends from the coils to housings which are proximate to the remaining coil supports; selectively cutting the wire at the housing to remove the portions of the wire which extend directly between the housings, while leaving uncut the intermediate portions of the wire which extend between the coils and between the coils and the housings, whereby all the coil supports have coils wound thereon and the coils are connected in series, in pairs, by the intermediate portions of the wire with an end of the wire of each winding extending into a proximate housing; inserting terminals into all of the housings thereby to establish electrical contact between the wire ends and the terminals, and connecting the lead wires to all of the terminals.

The current state of the art is further exemplified by US—A—4 130 331 and US—A—4 118 103, for example.

For a better understanding of the invention reference will now be made by way of example to the accompanying drawings, in which:—

Figure 1 is a perspective view of a four phase, eight coil stepper electric motor stator, showing an electrical terminal of the stator exploded therefrom, and a wire end portion to be inserted into the terminal;

Figure 2 is a perspective view of the core of the stator prior to its being wound, and showing a moulded terminal housing support exploded from the core;

Figure 3 is a fragmentary plan view of the housing support showing one terminal housing thereof;

Figure 4 is a view taken on the lines IV—IV of Figure 3;

Figures 5 and 6 are views taken on the lines V—V and VI—VI of Figure 4, respectively;

Figure 7 is an enlarged perspective view of the terminal shown in Figure 1, but also showing a carrier strip to which the terminal was attached prior to its assembly to the stator;

Figure 8 is a diagram illustrating the relative positions of parts of the housing support (when mounted on the stator core), and of the stator core, prior to the stator core being wound;

Figures 9 to 12 are views similar to that of Figure 8, illustrating consecutive steps in winding the stator;

Figure 13 is a view similar to that of Figure 6, illustrating the insertion of a terminal into a cavity of a housing and the severing of a coil wire extending from the cavity;

Figure 14 is a schematic circuit diagram of the stator, lead wires thereof not being shown;

Figure 15 is a schematic circuit diagram of a three phase, twelve coil, stepper electric motor, stator lead wires thereof not being shown; and

Figure 16 is a schematic circuit diagram of a two phase, eight coil, stepper electric motor stator, lead wires thereof not being shown.

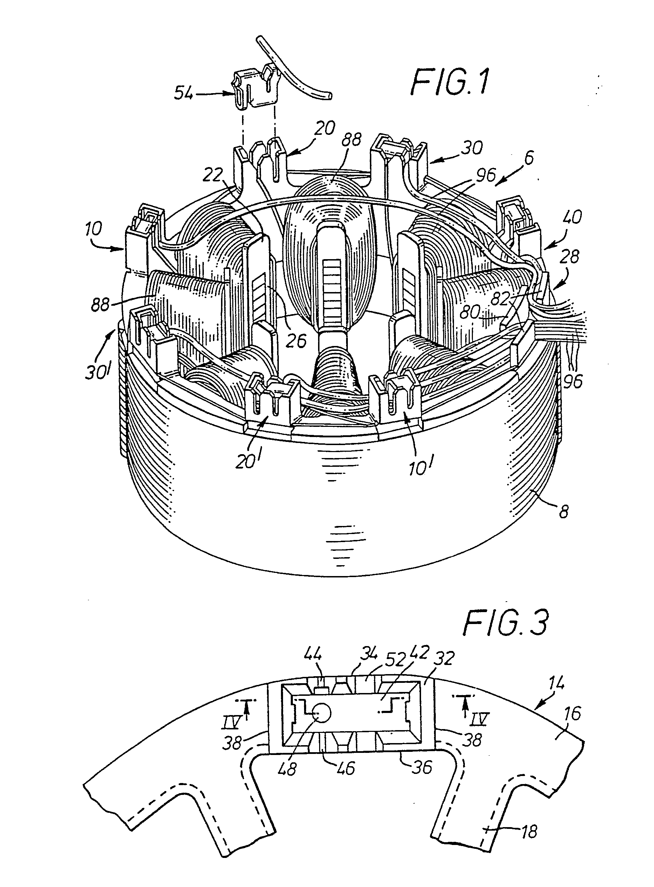

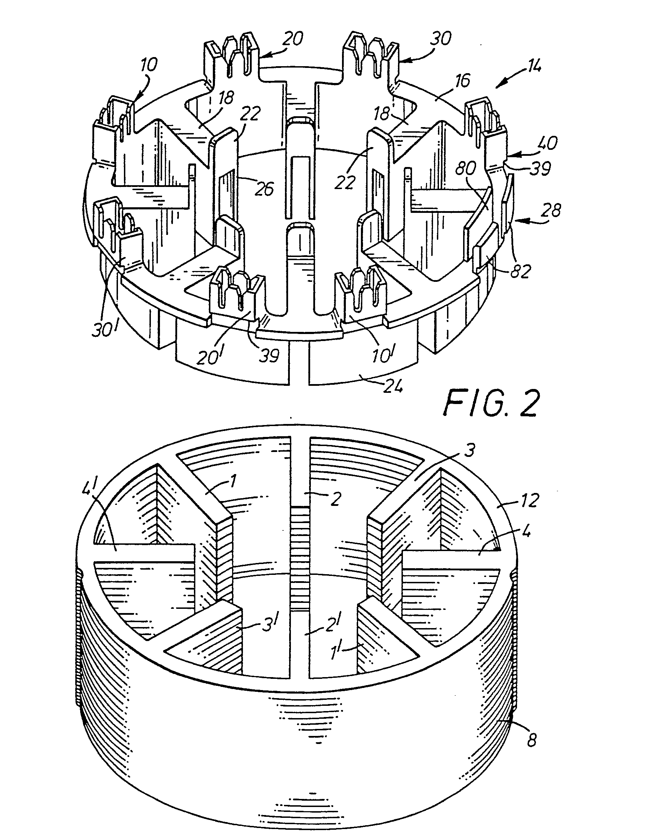

A four phase, eight coil, stepper electric motor stator 6 comprises as shown in Figures 1 and 2, a circular cross-section cylindrical stator core 8 composed of a stack of identical laminae of magnetic material. The laminae have, formed integrally therewith, radially inwardly directed arms which constitute coil supports 1, 2, 3 and 4, and 1', 2', 3' and 4', which are spaced at equal angular intervals about the core 8, the supports bearing reference numerals with "prime" symbols, being positioned radially opposite to those bearing the same numerals without "prime" symbols. The stator core 8 has an upper (as seen in Figure 2) face 12, on which is mounted, a moulded housing support 14 secured to the core 8, and comprising a housing supporting ring 16 of the same diameter as the stator core 8 and having radially inwardly directed hollow arms 18 having depending side walls 26 which receive between them the coil supports 1 to 4 and 1' to 4'. The free ends of the arms 18 have thereon upstanding flanges 22 serving as keepers for stator coils 88 to be wound on the arms 18 and thus about the coil supports. The housing support 14 also has depending flanges 24 which extend into the core 8 and between the coil supports which provide smooth surfaces against which the coils 88 are wound. The housing support 14 may be made of any suitable insulating material, preferably of a thermoplastics material, for example, nylon.

A plurality of electrical terminal housings 10, 20, 30 and 40, and 10', 20' and 30' are upstanding from the ring 16 at spaced angular intervals which are such that one of the housings is located between each adjacent pair of coil supports of the core 8, excepting the coil supports 4 and 1'. A lead wire strain relief means 28 is provided on the support 14 between the coil supports 4 and 1'. The housing 10' is substantially, but not precisely, radially opposite to the housing 10, the housing 10 being associated with the coil support 1 while the housing 10' is associated with the coil support 1' as described below. The number of the terminal housings is one less than the number of the coil supports and the number of coils on the stator core 8.

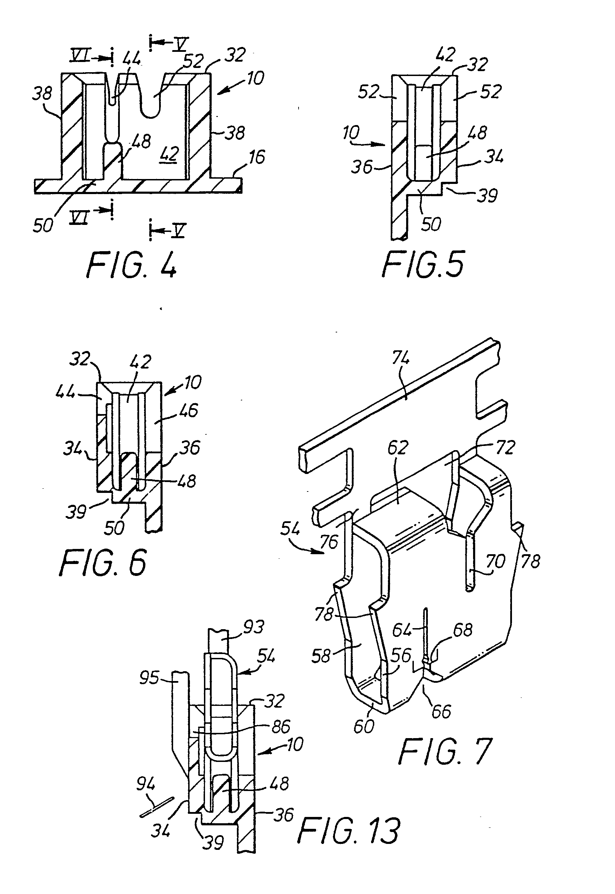

Since the housings 10 to 40 and 10' to 30' are identical with one another only the housing 10 (shown in detail in Figures 3 to 6) will be described here.

The housing 10 has an upper (as seen in Figures 3 to 6) terminal receiving surface 32, a radially outwardly directed side wall 34, a radially inwardly directed side wall 36 and circumferentially facing end walls 38. The side wall 34 has a recess 39 in its lower (as seen in Figures 5 and 6) end to provide coil wire receiving surfaces or guide means when the coils 88 are wound on the core 8.

A terminal receiving cavity 42 extending into the housing 10 from the surface 32 thereof is dimensioned to receive a substantially rectangular electrical terminal 54 (best seen in Figure 7) and is therefore substantially rectangular. A pair of aligned coil wire admitting slots 44 and 46 are provided in the side walls 34 and 36, respectively, the slot 44 being shallower than the slot 46. A column 48 upstands from the bottom 50 of the cavity 42, the upper end of the column 48 coinciding with the inner end of the slot 46. Lead wire admitting slots 52 of equal depth, also provided in the side walls 34 and 36, are dimensioned to receive insulated lead wires as described below.

As best seen in Figure 7 each terminal 54 comprises parallel plates 56 and 58 connected at their lower (as seen in Figure 7) ends by a bight 60. The upper (as seen in Figure 7) end of the plate 56 has a flange 62 projecting towards the plate 58 and co-operating therewith to define a seam.

Aligned coil wire receiving slots 64 (one shown) in the plates 54 and 56 extend downwardly (as seen in Figure 7) to communicate with a wider opening 66 in the bight 60. Narrow shoulders 68 are formed at the lower ends of the slots 64 by shearing the terminal stock along L-shaped shear lines during forming of the terminal 54, so that sections of metal are bent away from the plane of the metal stock, these sections being subsequently bent back substantially into their original positions. This shearing and bending operation has the effect of displacing the sheared out metal sections very slightly towards each other thereby to provide the narrow shoulders 68 which have a width of about 0.1016 mm and which penetrate the thin, but hard, varnish insulation of the coil wire.

Aligned lead wire receiving slots 70 also provided in the plates 54 and 56, extend downwardly (as seen in Figure 7) from a wider opening 72 in the flange 62 and in the upper portions of the plates 54 and 56. The width of the slots 70 is such that upon movement of an insulated lead wire thereinto the insulation of the wire is penetrated by the walls of the slots 70 to establish electrical connection with the metal core of the lead wire. The terminals 54 are produced as a continuous strip of terminals by stamping and forming operations, the terminals being connected to a continuous carrier strip 74 by slugs 76. At the time of insertion of a terminal 54 into its housings, the terminal 54 is severed from the carrier strip 74. Each terminal 54 has barbs 78 extending from the side edges of the plates 56 and 58, which bite into the internal side walls of the cavity 42 to retain the terminal 54 therein.

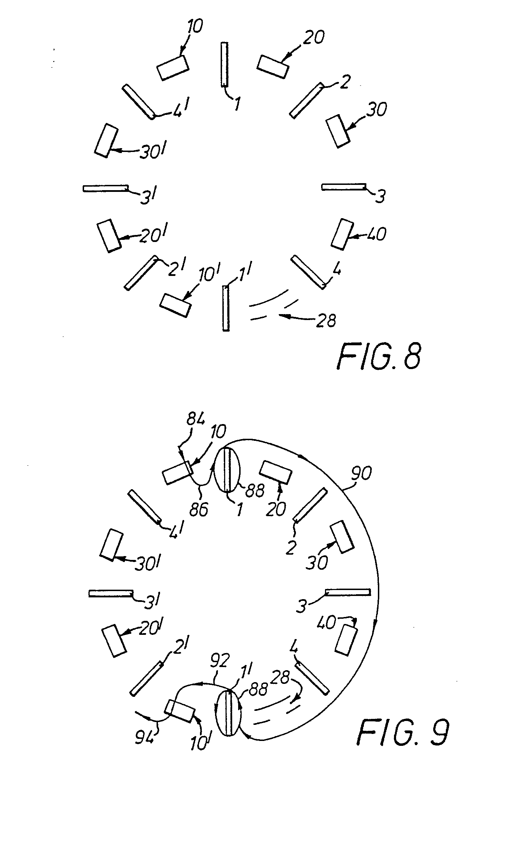

The winding of the coils 88 and the formation of the electrical connections between the lead wires and the coils 88 will now be described with particular reference to Figures 8 to 12. The winding operation may be carried out by means of a known coil winding machine (not shown), for example, as supplied by Windamatic Systems Incorporated, of Fort Wayne, Indiana or by Essex Machine and Terminal Division of Essex International, also of Fort Wayne, Indiana.

Figure 8 best shows the relative angular positions of the housings 10, 20, 30 and 40 and 10', 20' and 30', which are spaced about the periphery of the stator core, and of the coil supports 1 to 4 and 1' to 4'.

According to Figure 9, a coil wire, generally referenced 84, is drawn from a spool (not shown) and is first passed through the coil wire admitting slots 44 and 46 in the housing 10. The coil winding machine then moves to the coil support 1 and winds a coil 88 thereon. A portion 86 of the wire 84 thus extends from the housing 10 to the wound coil 88 on the support 1. The wire 84 is then laced about the periphery of the housing support 14 through the recesses 39 of the housings 20, 30 and 40 to the coil support 1'. A coil 88 is then wound by the machine about the coil support 1' which is opposite to the coil support 1. The wire is then laced from the coil 88 on the support 1' to the housing 10' and is positioned in the coil wire admitting slots 44 and 46 thereof, the wire entering the housing 10' at the inwardly directed side wall 36 thereof and extending from its outwardly directed side wall 34. An intermediate portion 90 of the wire 84 thus extends from the coil 88 on coil support 1 to the coil 88 on the coil support 1', an end portion 92 of the wire 84 extending from the coil on the support 1' to the housing 10'.

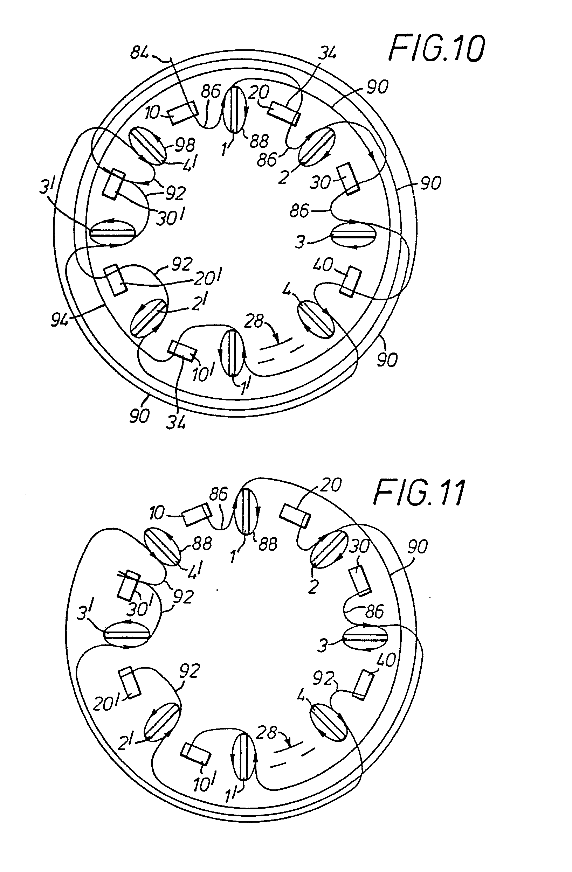

The wire 84 is then laced in a clockwise (as seen in Figure 9) direction about the periphery of the housing support 14 to the housing 20 so than an intermediate portion 94 of the wire 84 extends from the outwardly directed side wall 34 of the housing 10' to the outwardly directed side wall 34 of the housing 20 as shown in Figure 10. The wire 84 is then positioned in the coil wire admitting slots 44 and 46 of the housing 20, is wound on the coil support 2 and is then laced about the periphery of the housing support 14 to the coil support 2', the wire is laced through the wire admitting slots 44 and 46 of the housing 20' in the manner described above with reference to the housing 10'. This winding process is repeated for each pair of opposite coil supports until a coil 88 has been wound on the coil support 4' as shown in Figure 10 and the wire from the coil on the support 4' is passed through the wire admitting slots 44 and 46 in the housing 30'. The housing 30' thus receives end portions 92 of wire 84 from both of the coils on the supports 3' and 4'.

The winding process described above is continuous and when it has been completed, the wire 84 extends as an unbroken filament along all of the paths shown in Figure 10. After the stator 6 has been removed from the winding machine, a terminal 54 is inserted into each terminal receiving cavity 42 by an insertion punch 93 (Figure 13) and at the same time a cutting blade 95 is passed over the outwardly directed side walls 34 of the housings thereby to cut the coil wire 84 wherever it extends to, or from, an outwardly directed side wall 34 of the housing, to remove the portions of wire 94 which extend from the wall 34.

When this terminal inserting and wire cutting operation has been completed, opposite pairs of coils 88 are left connected in series as shown in Figure 11 by intermediate wire portions 90, the end portions 86 and 92 of the wires of each coil 88 extending to an adjacent housing. The terminal insertion and wire trimming operation is preferably carried out by means of apparatus of the kind disclosed in US—A—4,099,316 and US—A—3,984,908, suitably modified to accept a stator coil.

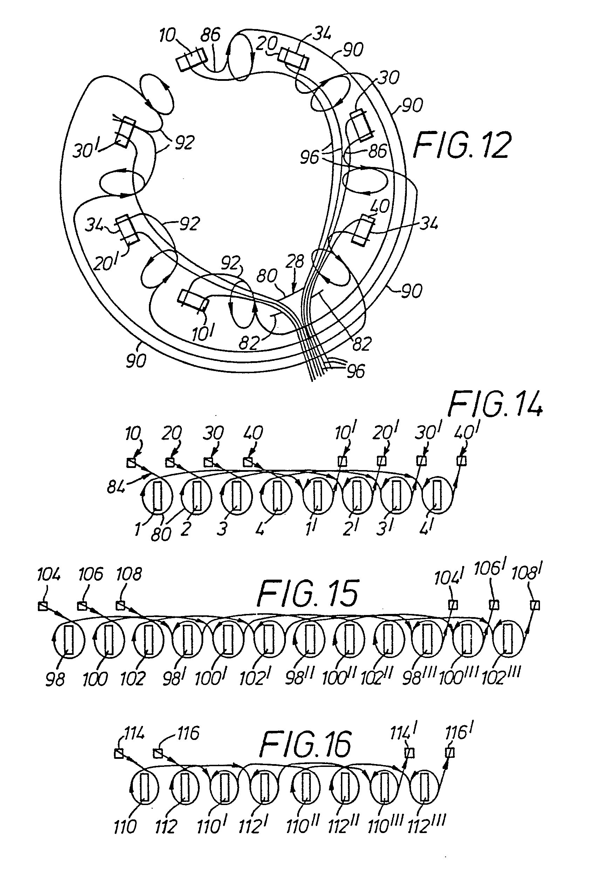

In the final step in assembling the stator 6, which is shown as completed in Figure 12 (in which the coil supports 1 to 4, and 1' to 4' are not shown), lead wires 96 are inserted into the housing cavities 42, by moving the wires 96 laterally of their longitudinal axes into the wire admitting slots 52 of the housings and into the wire receiving slots 70 of the terminals 54. In the present embodiment, the lead wires 96 are dressed about inner portions of the stator, over the coils 88 and through the strain relief means 28, between an inner wall 80 and two spaced outer walls 82 thereof. The walls 80 and 82 provide a restricted passage for guiding the wires 96 from the housing support 14 and for imposing a clamping force on the wires 96.

The finished stator 6 shown in Figure 1 is neat and orderly in appearance and provides protected electrical connections for the lead wires 96 and the coil windings 88. The stator 6 can withstand normal, and even rough, handling during subsequent manufacturing steps in the assembly of the completed motor. The manufacturing method described above is most advantageous in that virtually all of the operations can be carried out by means of a winding machine so that the manual steps, of cutting out the scrap wire (94 in Figures 1 and 10), identifying the correct coil winding ends and connecting them to the corresponding lead wires are totally eliminated. The use of the present method thus very substantially reduces the cost of producing a stepper motor stator assembly.

Figure 14 is a schematic diagram of the four phase, eight coil (two coils per phase) stepper motor stator 6 described above. The same reference numerals in Figure 14, identify the coil supports and the housings, as in Figures 1 to 12, the lead wires 96 not being shown in Figures 14, which is intended only to assist an understanding of Figures 15 and 16.

The three phase, twelve coil (four coils per phase), stepper motor stator shown in Figure 15 has three separate coil windings, the first of which extends through a housing 104 to a coil support 98 on which a coil is wound. The winding of this coil extends from the coil support 98, to a coil support 98', to a coil support 98'', then to a coil support 98''' and finally extends through a terminal housing 104'. Coils are, of course, wound on the intermediate coils supports 98' and 98'' as well as on the final coil support 98'''. The second coil winding and the third coil winding extend through terminal housings 106 and 108, respectively, to coil supports 100 and 102, respectively. Each of these coil windings extends to two intermediate coil supports and then to final coil supports 100''' and 102''', on which the final coils of the windings are wound. The ends of the second and third windings extend through terminal housings 106' and 108'.

The two phase, eight coil (four coils per phase) stepper motor stator shown in Figure 16 has a first winding extending from a terminal housing 114 to a coil support 110 and then to coil supports 110', 110'' and 110''', the end of the first winding extending from the coil support 110''' to a terminal housing 114'. The second winding similarly extends from a terminal housing 116 to coil supports 112, 112', 112'' and 112''' to a terminal housing 16'. As with the embodiment described with reference to Figures 1 to 12, the intermediate portions of the windings which extend between the coils of each set are preferably dressed about the periphery of the stator.

For winding the stators of Figures 15 and 16 the winding machine is programmed to lace the coil wire in such a way that the wiring patterns of Figures 15 and 16 are achieved. The wire is laced continuously, and at the conclusion of the lacing operation, the selected wires are cut away and discarded in accordance with the principles explained above in relation to the manufacture of a four phase stepper motor stator. Similar techniques can be applied stepper motor stators having wiring patterns, other than those disclosed above.

Certain of the coil winding ends are commonly connected in all stepper motor stators and if desired, a housing and connecting terminal can be provided for such commonly connected wire ends. Alternatively, lead wires extending from wires to be commonly connected can be spliced, e.g. by means of a crimped connection, to effect the common connection.

**Claims**

1. An electric motor stator (6) comprising a stator core (8), a plurality of coil supports (1 to 4 and 1' to 4') formed integrally with the core (8) extending inwardly towards the centre of the core (8) at equally spaced angular intervals, a winding (88) of coil wire (84) on each of the coil supports (1 to 4 and 1' to 4'), the windings (88) on selected coil supports (1 and 1', 2 and 2') being connected in series by intermediate portions (90 and 94) of the coil wire (84), and lead wires (96) connected to the coils (88), the stator (6) having mounted thereon a plurality of terminal receiving housings (10 to 40 and 10' to 30'), each housing (10 to 40 and 10' to 30') having a terminal receiving cavity (42) therein, and a radially inwardly directed side wall (36) and a radially outwardly directed side wall (34), coil wire admitting slots (44 and 46) in the respective side walls (34 and 36) communicating with cavity (42), end portions (86 and 92) of the coil wire (84) extending from each winding (88) to a terminal receiving housing (10 to 40 and 10' to 30') through the coil wire admitting slot (46) in the radially inwardly directed side wall (36) thereof, through the cavity (42) thereof and terminating at the coil wire admitting slot (44) in the radially outwardly directed side wall (34) thereof, the cavities (42) receiving terminals (54) to which the wire end portions (86 and 92) and lead wires (96) are electrically connected; characterised in that the housings of the stator (6), which is for an electric stepper motor (10 to 40 and 10' to 30'), are spaced from one another about the periphery of the stator core (8) with one housing positioned between the coil supports of each adjacent pair of coil supports (1 to 3 and 2' to 4') excepting one adjacent pair (4 and 1') or group of adjacent coil supports (102—98''').

2. A stator according to Claim 1, characterised in that each terminal (54) has a coil wire receiving slot (64) and a lead wire receiving slot (70) therein, the end positions (86 and 92) of the coil wires (84) being received in the coil wire receiving slots (64) and the lead wires (96) having end portions which are received in the lead wire receiving slots (70).

3. A stator according to Claim 1 or 2, characterised in that the housings (10 to 40 and 10' to 30') are formed integrally with, and extend from, a supporting ring (16), mounted on one face (12) of the stator core (8), the intermediate portions (90 and 94) of the coil wires (84) extending about peripheral portions of the stator, the intermediate portions (90 and 94) being located outwardly of the housings (10 to 40 and 10' to 30') and extending past the radially outwardly directed side walls (34) thereof.

4. A stator according to Claim 1, 2 or 3, characterised by lead wire guide and strain relief means (28) located between the coil supports of the one adjacent pair or group of adjacent coil supports (4 and 1') between which there is no housing (10 to 40 or 10' to 30').

5. A stator according to any one of the preceding claims characterised in that it is for a four phase, eight coil, motor, the stator (6) having eight coil supports (1 to 4 and 1' to 4') on which the coils (88) are wound, those coils (88) which are opposite to one another radially of the stator core (8) being connected in series.

6. A stator according to Claim 1, 2 or 3, characterised in that the coil supports (1 to 4 and 1' to 4') are *n* in number, the housings (10 to 40 and 10' to 30') being *n* − 1 in number, one housing being positioned between the coil supports of each adjacent pair of coil supports (1 to 3 and 2' to 4'), excepting one adjacent pair (4 and 1') thereof.

7. A stator according to Claim 6, characterised in that the lead wires (96) extend from the terminals (54) along arcuate paths towards, and between, wire strain relief members (80 and 82) formed integrally with the housing support (14) and being positioned between the one adjacent pair of coil supports (4 and 1').

8. A method of manufacturing a stator according to Claim 1, characterised by the steps of mounting the housings (10 to 40 and 10' to 30') on one face (12) of the stator core (8) with one housing between the coil supports of each pair of adjacent coil supports (1 to 3 and 2' to 4') excepting the one adjacent pair (1' and 4) or group of adjacent coil supports, and locating the lead wires (96) in one lead wire strain relief means (28) positioned between the coil supports (1' and 4') of the one adjacent pair or group of adjacent coil supports; drawing the coil wire (84) from a coil wire source, lacing the coil wire (84) through the coil wire admitting slots (44 and 46) of a first (10) of the housings (10 to 40 and 10' to 30') to a first (1) of the coil supports (1 to 4 and 1' to 4') and winding a coil (88) on the first coil support (1); lacing the wire (84) from the first coil support (1) about the periphery of the stator (6) to a second (1') of the coil supports (1 to 4 and 1' to 4') which is spaced from the first coil support (1), winding a coil (88) on the second coil support (1') and lacing the wire (84) from the second coil support (1') through the coil wire admitting slots (44 and 46) of a second (10') of the housings (10 to 40 and 10' to 30') which is proximate to the second coil support (1'); lacing the wire (84) from the second housing (10') about the periphery of the stator (6) to a third (20) of the housings (10 to 40 and 10' to 30') which is proximate to a third (2) of the coil supports (1 to 4 and 1' to 4'), lacing the wire (84) through the coil wire admitting slots (44 and 46) of the third housing (20) and winding a coil (88) on the third coil support (2), lacing the wire (84) from the third coil support (2) about the periphery of the stator (6) to a fourth (2') of the coil supports (1 to 4 and 1' to 4'), winding a coil (88) on the fourth coil support (2') and then lacing the wire (84) through the coil wire admitting slots of a fourth (20') of the housings (10 to 40 and 10' to 30') which is proximate to the fourth coil support (2'), and continuing to lace the wire through the coil wire admitting slots of further ones of the housings (30, 30' and 40) and to wind coils (88) on associated pairs of coil supports (3 and 3' and 4 and 4') until coils (88) have been wound on all of the remaining pairs of coil supports (3 and 3' and 4 and 4') so that the wire (84) extends from the coils (88) to housings (30, 30' and 40) which are proximate to the remaining coil supports (3 and 3' and 4 and 4'); selectively cutting the wire (84) at the housings (10 to 40 and 10' to 30') to remove the portions of the wire (84) which extend directly between the housings (10 to 40 and 10' to 30'), while leaving uncut the intermediate portions (90 and 94) of the wire (84) which extend between the coils (88) and between the coils (88) and the housings (10 and 40 and 10' and 30'), whereby all the coil supports (1 to 4 and 1' to 4') have coils (88) wound thereon and the coils (88) are connected in series, in pairs, by the intermediate portions (90 and 94) of the wire (84) with an end (86 or 92) of the wire of each winding (88) extending into a proximate housing; inserting terminals (54) into all of the housings (10 to 40 and 10' to 30') thereby to establish electrical contact between the wire ends (86 and 92) and the terminals (54), and connecting the lead wires (96) to all of the terminals (54).

9. A method according to Claim 8, characterised in that the steps of selectively cutting the wire (84) at the housings (10 to 40 and 10' to 30') and inserting the terminals (54) into the housings (10 to 40 and 10' to 30') are carried out substantially simultaneously.

**Revendications**

1. Stator (6) de moteur électrique comprenant un noyau (8) de stator, plusieurs supports de bobine (1 à 4 et 1' à 4') realisés d'une seule pièce avec le noyau (8) et s'étendant vers l'intérieur, en direction du centre du noyau (8) à intervalles angulaires espacés régulièrement, un enroulement (88) de fil (84), sur chacun des supports de bobines (1 à 4 et 1' à 4'), les enroulements (88) de supports de bobines choisis (1 et 1', 2 et 2') étant connectés en série par des tronçons intermédiaires (90 et 94) du fil (84) de bobine, et des fils (96) de connexion étant connectés aux bobines (88), le stator (6) portant plusieurs boîtiers (10 à 40 et 10' à 30') de réception de bornes, chacun des boîtiers (10 à 40 et 10' à 30') présentant une cavité (42) de réception d'une borne, et une paroi latérale (36) dirigée radialement vers l'intérieur et une paroi latérale (34) dirigée radialement ver l'extérieur, des fentes (44 et 46) d'admission de fil de bobine dans les parois latérales respectives (34 et 36) communiquant avec la cavité (42), des tronçons extrêmes (86 et 92) du fil (84) de bobine s'étendant de chaque enroulement (88) jusqu'à un boîtier (10 à 40 et 10' à 30') de réception de bornes en passant par la fente (46) d'admission de fil de bobine ménagée dans la paroi latérale (36), dirigée radialement vers l'intérieur, du boîtier, à travers la cavité (42) de celui-ci et aboutissant à la fente (44) d'admission de fil de bobine ménagée dans la paroi latérale (34), dirigée radialement vers l'intérieur, du boîtier, les cavités (42) recevant des bornes (54) auxquelles les tronçons extrêmes (86 et 92) de fil et des fils de connexion (96) sont connectés électriquement; caractérisé en ce que les boîtiers du stator (6), qui est destiné à une moteur électrique pas à pas (10 à 40 et 10' à 30'), sont espacés les uns des autres sur la périphérie du noyau (8) du stator, un boîtier étant positionné entre les supports de bobines de chaque paire adjacente de supports de bobines (1 à 3 et 2' à 4'), excepté une première paire adjacente (4 et 1') ou une groupe de supports adjacents (102—98''') de bobines.

2. Stator selon la revendication 1, caractérisé en ce que chaque borne (54) présente une fente (64) de réception d'un fil de bobine et une fente (70) de réception d'un fil de connexion, les tronçons extrêmes (86 et 92) des fils (84) de bobines étant logés dans les fentes (64) de réception de fils de bobines et les fils (96) de connexion comportant des tronçons extrêmes qui sont logés dans les fentes (70) de réception de fils de connexion.

3. Stator selon la revendication 1 ou 2, caractérisé en ce que les boîtiers (10 à 40 et 10' à 30') sont réalisés d'une seule pièce avec un anneau (16) de support duquel ils font saillie et qui est monté sur une face (12) du noyau (8) de stator, les tronçons intermédiaires (90 et 94) des fils (84) de bobines s'étendant sur des parties périphériques du stator, les tronçons intermédiaires (90 et 94) étant situés extérieurement aux boîtiers (10 à 40 et 10' à 30') et s'étendant au-delà de leurs parois latérales (34) dirigées radialement vers l'extérieur.

4. Stator selon le revendication 1, 2 ou 3, caractérisé par un dispositif (28) de guidage et de soulagement de contraintes des fils de connexion, placé entre les supports de bobines de la première paire adjacente ou du groupe de supports adjacents (4 et 1') de bobines entre lesquels il n'y a pas de boîtier (10 à 40 ou 10' à 30').

5. Stator selon l'une quelconque des revendications précédentes, caractérisé en ce qu'il est destiné à un moteur à quatre phases, huit bobines, le stator (6) comportant huit supports de bobines (1 à 4 et 1' à 4') sur lesquels les bobines (8) sont enroulées, les bobines (88) qui sont opposées l'une à l'autre, radialement au noyau du stator, étant connectées en série.

6. Stator selon la revendication 1, 2 ou 3, caractérisé en ce que les supports de bobines (1 à 4 et 1' à 4') sont en nombre $n$, les boîtiers (10 à 40 et 10' à 30') sont en nombre $n - 1$, un boîtier étant positionné entre les supports de bobines de chaque paire adjacente de supports de bobines (1 à 3 et 2' à 4'), excepté une première paire adjacente (4 et 1') de supports.

7. Stator selon la revendication 6, caractérisé en ce que les fils de connexion (96) partent des bornes (54) en suivant des trajets incurvés vers, et entre, des éléments (80 et 82) de soulagement de contraintes des fils, réalisés d'une seule pièce avec le support (14) de boîtiers et étant disposés entre ladite première paire adjacente de supports de bobines (4 et 1').

8. Procédé de fabrication d'un stator selon la revendication 1, caractérisé par les étapes qui consistent à monter les boîtiers (10 à 40 et 10' à 30') sur une face (12) du noyau (8) du stator de manière qu'un boîtier soit placé entre les supports de bobines de chaque paire de supports adjacents de bobines (1 à 3 et 2' à 4'), excepté la première paire adjacente (1' et 4) ou le groupe de supports adjacents de bobines, et à placer les fils (96) de connexion dans un dispositif (28) de soulagement des contraintes des fils de connexion, positionné entre les supports de bobines (1' et 4) de la première paire adjacente ou du groupe de supports adjacents de bobines; à tirer le fil (84) de bobine d'une source de fil de bobine, à faire passer le fil (84) de bobine dans les fentes (44 et 46) d'admission de fil de bobine d'un premier (10) des boîtiers (10 à 40 et 10' à 30') vers un premier (1) des supports de bobines (1 à 4 et 1' à 4') et à enrouler une bobine (88) sur la premier support (1) de bobine; à faire passer le fil (84) du premier support (1) de bobine sur la périphérie du stator (6) vers un deuxième (1') des supports (1 à 4 et 1' à 4') de bobines, qui est espacé du premier support (1) de bobine, à enrouler une bobine (88) sur le deuxième support (1') de bobine et à faire passer le fil (84) du deuxième support (1') de bobine dans les fentes (44 et 46) d'admission de fil de bobine d'un deuxième (10') des boîtiers (10 à 40 et 10' à 30'), qui est proche du deuxième support (1') de bobine; à faire passer le fil (84) du deuxième boîtier (10') sur la périphérie du stator (6) vers un troisième (20) des boîtiers (10 à 40 et 10' à 30') qui est proche d'un troisième (2) des supports de bobines (1 à 4 et 1' à 4'), à faire passer le fil (84) dans les fentes (44 et 46) d'admission de fil de bobine du troisième boîtier (20) et à enrouler une bobine (88) sur le troisième support (2) de bobine, à faire passer le fil (84) du troisième support (2) de bobine sur la périphérie du stator (6) vers un quatrième (2') des supports de bobines (1 à 4 et 1' à 4'), à enrouler une bobine (88) sur le quatrième support (2') de bobine puis à faire passer le fil (84) dans les fentes d'admission de fil de bobine d'un quatrième (20) des boîtiers (10 à 40 et 10' à 30') proche du quatrième support (2') de bobine, et à continuer de faire passer le fil dans les fentes d'admission de fil de bobine d'autres des boîtiers (30, 30' et 40) et à enrouler des bobines (88) sur des paires associées de supports de bobines (3 et 3' et 4 et 4') jusqu'à ce que des bobines (88) aient été enroulées sur toutes les paires adjacentes de supports de bobines (3 et 3' et 4 et 4') afin que le fil (84) s'étende des bobines (88) aux boîtiers (30, 30' et 40) qui sont proches des supports de bobines restants (3 et 3' et 4 et 4'); à couper sélectivement le fil (84) aux boîtiers (10 à 40 et 10' à 30') pour retirer les tronçons du fil (84) qui s'étendent directement entre les boîtiers (10 à 40 et 10' à 30'), tout en laissent non coupés les tronçons intermédiaires (90 et 94) du fil (84) qui s'étendent entre les bobines (88) et entre les bobines (88) et les boîtiers (10 et 40 et 10' et 30'), afin que des bobines (88) soient enroulées sur tous les supports de bobines (1 à 4 et 1' à 4') et que les bobines (88) soient connectées en série, par paires, par les tronçons intermédiaires (90 et 94) du fil (84), une extrémité (86 ou 92) du fil de chaque enroulement (88) pénétrant dans un boîtier voisin; à insérer des bornes (54) dans tous les boîtiers (10 à 40 et 10' à 30') afin d'établir un contact électrique entre les extrémités (86 et 92) de fil et les bornes (54) et à connecter les fils de connexion (96) à toutes les bornes (54).

9. Procédé selon la revendication 8, caractérisé en ce que les étapes qui consistent à couper sélectivement le fil (84) aux boîtiers (10 à 40 et 10' à 30') et à insérer les bornes (54) dans les boîtiers (10 à 40 et 10' à 30') sont exécutées à peu près simultanément.

**Patentansprüche**

1. Stator (6) für einen Elektromotor, mit einem Statorkern (8), mit einer Mehrzahl von Spulenträgern (1 bis 4 und 1' bis 4'), die einstückig mit dem Kern (8) ausgebildet sind und sich in gleichmäßigen Winkelabständen voneinander nach innen in Richtung auf die Mitte des Kerns (8) erstrecken, mit einer Wicklung (88) von Spulendraht (84) auf jedem der Spulenträger (1 bis 4 und 1' bis 4'), wobei die Wicklungen (88) auf ausgewählten Spulenträgern (1 und 1', 2 und 2') durch Zwischenbereiche (90 und 94) des Spulendrahts (84) in Reihe miteinander verbunden sind, und mit Zuleitungsdrähten (96), die mit den Spulen (88) verbunden sind, wobei an dem Stator (6) eine Mehrzahl von Anschlußaufnahmegehäusen (10 bis 40 und 10' bis 30') angebracht ist, wobei jedes Gehäuse (10 bis 40 und 10' bis 30') einen Anschlußaufnahmehohlraum (42) in seinem Inneren sowie eine radial nach innen weisende Seitenwand (36) und eine radial nach außen weisende Seitenwand (34) aufweist, wobei Spulendraht-Einführschlitze (44 und 46) in den jeweiligen Seitenwänden (34 und 36) mit dem Hohlraum (42) in Verbindung stehen und sich Endbereiche (86 und 92) des Spulendrahts (84) von jeder Wicklung (88) zu einem Anschlußaufnahmegehäuse (10 bis 40 und 10' bis 30') erstrekken, wobei sich die Endbereiche (86 und 92) durch den Spulendraht-Einführschlitz (46) in der radial nach innen weisenden Seitenwand (36) eines Anschlußaufnahmegehäuses (10 bis 40 und 10' bis 30') sowie durch den Hohlraum (42) hindurcherstrecken und an dem Spulendraht-Einführschlitz (44) in der radial nach außen weisenden Seitenwand (34) eines Anschlußaufnahmegehäuses (10 bis 40 und 10' bis 30') enden, und wobei die Hohlräume (42) Anschlüsse (54) aufnehmen, mit denen die Drahtendbereiche (86 und 92) und die Zuleitungsdrähte (96) elektrisch verbunden sind, dadurch gekennzeichnet, daß die Gehäuse (10 bis 40 und 10' bis 30') des Stators (6), der für einen elektrischen Schrittmotor bestimmt ist, um den Umfang des Statorkerns (8) voneinander beabstandet sind, wobei jeweils ein Gehäuse zwischen den Spulenträgern eines jeden Paares von benachbarten Spulenträgern (1 bis 3 und 2' bis 4'), mit Ausnahme eines benachbarten Paares (4 und 1') oder einer Gruppe benachbarter Spulenträger (102 bis 98'''), positioniert ist.

2. Stator nach Anspruch 1, dadurch gekennzeichnet, daß in jedem Anschluß (54) ein Spulendraht-Aufnahmeschlitz (64) und ein Zuleitungsdraht-Aufnahmeschlitz (70) ausgebildet sind, wobei die Endbereiche (86 und 92) der Spulendrähte (84) in den Spulendraht-Aufnahmeschlitzen (64) aufgenommen sind und die Zuleitungsdrähte (96) Endbereiche aufweisen, die in den Zuleitungsdraht-Aufnahmeschlitzen (70) aufgenommen sind.

3. Stator nach Anspruch 1 oder 2, dadurch gekennzeichnet, daß die Gehäuse (10 bis 40 und 10' bis 30') mit einem Tragering (16), der an einer Seite (12) des Statorkerns (8) angebracht ist, einstückig ausgebildet sind sowie sich von diesem wegerstrecken, und daß sich die Zwischenbereiche (90 und 94) der Spulendrähte (84) um Umfangsbereiche des Stators herumerstrecken, wobei sich die Zwischenbereiche (90 und 94) außerhalb der Gehäuse (10 bis 40 und 10' bis 30') befinden und sich an den radial nach außen weisenden Seitenwänden (34) derselben vorbeierstrecken.

4. Stator nach Anspruch 1, 2 oder 3, gekennzeichnet durch eine Zuleitungsdrahtführungs- und Zugentlastungseinrichtung (28), die sich zwischen den Spulenträgern des einen Paares von benachbarten Spulenträgern (4 und 1') oder der einen Gruppe von benachbarten Spulenträgern befindet, zwischen denen kein Gehäuse (10 bis 40 oder 10' bis 30') vorhanden ist.

5. Stator nach einem der vorausgehenden Ansprüche, dadurch gekennzeichnet, daß er für einen vierphasigen Motor mit acht Spulen vorgesehen ist, wobei der Stator (6) acht Spulenträger (1 bis 4 und 1' bis 4') aufweist, auf die die Spulen (88) gewickelt sind, wobei diejenigen Spulen (88), die sich in Umfangsrichtung des Statorkerns (8) gegenüberliegen, in Reihe miteinander verbunden sind.

6. Stator nach Anspruch 1, 2 oder 3, dadurch gekennzeichnet, daß die Anzahl der Spulenträger (1 bis 4 und 1' bis 4') n beträgt und die Anzahl der Gehäuse (10 bis 40 und 10' bis 30') n − 1 beträgt, wobei jeweils ein Gehäuse zwischen den Spulenträgern eines jeden Paares von benachbarten Spulenträgern (1 bis 3 und 2' bis 4'), mit Ausnahme eines benachbarten Paares (4 und 1') derselben, positioniert ist.

7. Stator nach Anspruch 6, dadurch gekennzeichnet, daß sich die Zuleitungsdrähte (96) längs gewundener Bahnen von den Anschlüssen (54) weg sowie zwischen Drahtzugentlastungsglieder (80 und 82) erstrecken, die einstückig mit dem Gehäuseträger (14) ausgebildet und zwischen dem einen Paar von benachbarten Spulenträgern (4 und 1') positioniert sind.

8. Verfahren zur Herstellung eines Stators nach Anspruch 1, gekennzeichnet durch folgende Schritte:

Befestigen der Gehäuse (10 bis 40 und 10' bis 30') an einer Seite (12) des Statorkerns (8), und zwar jeweils ein Gehäuse zwischen den Spulenträgern eines jeden Paares von benachbarten Spulenträgern (1 bis 3 und 2' bis 4'), mit Ausnahme des einen benachbarten Paares (1' und 4) oder der Gruppe von benachbarten Spulenträgern, und Festlegen der Zuleitungsdrähte (96) in einer Zuleitungsdraht-Zugentlastungseinrichtung (28), die zwischen den Spulenträgern (1' und 4) des einen benachbarten Paares oder der Gruppe von benachbarten Spulenträgern positioniert ist;

Ziehen des Spulendrahts (84) von einem Spulendrahtvorrat, Verlegen des Spulendrahts (84) durch die Spulendraht-Einführschlitze (44 und 46) eines ersten (10) Gehäuses (10 bis 40 und 10' bis 30') zu einem ersten (1) Spulenträger (1 bis 4 und 1' bis 4') und Wickeln einer Spule (88) auf den Spulenträger (1);

Verlegen des Drahts (84) von dem ersten Spulenträger (1) um den Außenumfang des Stator (6) zu einem zweiten (1') Spulenträger (1 bis 4 und 1' bis 4', der von dem ersten Spulenträger (1) beabstandet ist, Wickeln einer Spule (88) auf den zweiten Spulenträger (1') und Verlegen des Drahts (84) von dem zweiten Spulenträger (1') durch die Spulendraht-Einführschlitze (44 und 46) eines zweiten (10') Gehäuses (10 bis 40 und 10' bis 30'), das sich in der Nähe des zweiten Spulenträgers (1') befindet;

Verlegen des Drahts (84) von dem zweiten Gehäuse (10') um den Außenumfang des Stators (6) zu dem dritten (20) Gehäuse (10 bis 40 und 10' bis 30'), das sich in der Nähe eines dritten (2) Spulenträgers (1 bis 4 und 1' bis 4') befindet, Verlegen des Drahts (84) durch die Spulendraht-Einführschlitze (44 und 46) des dritten Gehäuses (20) und Wickeln einer Spule (88) auf den dritten Spulenträger (2), Verlegen des Drahts (84) von dem dritten Spulenträger (2) um den Außenumfang des Stators (6) zu einem vierten (2') Spulenträger (1 bis 4 und 1' bis 4'), Wickeln einer Spule (88) auf den vierten Spulenträger (2') und anschließendes Verlegen des Drahts (84) durch die Spulendraht-Einführschlitze eines vierten (20') Gehäuses (10 bis 40 und 10' bis 30'), das sich in der Nähe des vierten Spulenträgers (2') befindet, und Fortfahren des Verlegens des Drahts durch die Spulendraht-Einführschlitze von weiteren Gehäusen (30, 30' und 40) sowie des Wickelns von Spulen (88) auf einander zugeordnete Paare von Spulenträgern (3 und 3' und 4 und 4'), bis Spulen (88) auf alle übrigen Paare von Spulenträgern (3 und 3' und 4 und 4') gewickelt sind, so daß sich der Draht (84) von den Spulen (88) zu den Gehäusen (30, 30' und 40) erstreckt, die sich in der Nähe der übrigen Spulenträger (3 und 3' und 4 und 4') befinden;

selektives Abschneiden des Drahts (84) an den Gehäusen (10 bis 40 und 10' bis 30') zum Entfernen derjenigen Bereiche des Drahts (84), die sich direkt zwischen den Gehäusen (10 bis 40 und 10' bis 30') erstrecken, während die Zwischenbereiche (90 und 94) des Drahts (84), die sich zwischen den Spulen (88) sowie zwischen den Spulen (88) und den Gehäusen (10 und 40 und 10' und 30') erstrecken, nicht zerschnitten werden, wodurch auf alle Spulenträger (1 bis 4 und 1' bis 4') Spulen (88) gewickelt sind und die Spulen (88) durch die Zwischenbereiche (90 und 94) des Drahts (84) paarweise in Reihe miteinander verbunden sind, wobei sich ein Ende (86 oder 92) des Drahts jeder Wicklung (88) in ein benachbartes Gehäuse erstreckt;

Einsetzen von Anschlüssen (54) in alle Gehäuse (10 bis 40 und 10' bis 30'), um dadurch elektrischen Kontakt zwischen den Drahtenden (86 und 92) und den Anschlüssen (54) herzustellen, und Verbinden der Zuleitungsdrähte (96) mit allen Anschlüssen (54).

9. Verfahren nach Anspruch 8, dadurch gekennzeichnet, daß die Schritte des selektiven Abschneidens des Drahts (84) an den Gehäusen (10 bis 40 und 10' bis 30') sowie des Einsetzens von Anschlüssen (54) in die Gehäuse (10 bis 40 und 10' bis 30') im wesentlichen gleichzeitig ausgeführt werden.

FIG.1

FIG.3

FIG. 2

FIG. 4

FIG.5

FIG. 6

FIG. 7

FIG. 13

FIG.8

FIG. 9

FIG.10

FIG.11

FIG.12

FIG.14

FIG.15

FIG.16